# EUROPEAN PATENT SPECIFICATION

(11) **EP 1 145 062 B1**
(45) Date of publication and mention of the grant of the patent: **24.09.2003**
(21) Application number: 99963428.0
(22) Date of filing: 06.12.1999
(51) Int. Cl.: G02B 6/42

(54) **SEALED CONTAINER FOR OPTICAL COMPONENTS AND SEALED FEEDTHROUGH FOR OPTICAL FIBRES**
ABGEDICHTETES GEHÄUSE FÜR OPTISCHE KOMPONENTEN UND ABGEDICHTETE FASEROPTISCHE DURCHFÜHRUNG
CONTENANT ETANCHE POUR COMPOSANTS OPTIQUES ET TRAVERSEE ETANCHE POUR FIBRES OPTIQUES

(30) Priority: 29.12.1998 EP 98830799; 22.02.1999 US 121181 P
(43) Date of publication of application: 17.10.2001
(73) Proprietor: Optical Technologies Italia S.p.A., 20126 Milano (IT)
(72) Inventor: GOBBI, Luigi, I-20052 Monza (IT); SCHIATTONE, Francesco, I-22060 Novedrate (IT)
(74) Representative: Marchi, Massimo, Dr.
(86) International application number: EP9909640
(87) International publication number: WO00039619

(56) References cited:
- EP-A- 0 337 141
- EP-A- 0 690 322
- EP-A- 0 872 748
- WO-A-91/14958
- WO-A-99/42880
- DE-A- 3 628 391
- US-A- 4 707 065
- US-A- 4 756 592
- US-A- 5 029 968

## Description

The present invention relates to a container for optical components. In particular, active and/or passive optical components such as, for example, laser sources, optical splitters, components made with integrated optics and fibre devices can be contained inside a container. In general, for the purposes of the present invention, optical components are considered as being passive or active optical device, for example electrooptic and/or acousto-optic devices which require one or more connections with optical fibres.

In general, these components suffer from contact with particles of water contained in humidity and with other atmospheric agents, for example corrosive agents, which can give rise to a decline in the performance of the component, up to the point at which its correct functioning is compromised. In addition, in certain components, for example lasers, it is necessary that a defined gas composition inside the container remain unaltered for reasons of reliability.

Examples of optical components which require sealing are, for example, electrooptic modulators made on lithium niobate substrates, and acousto-optic devices. The materials inside the container which suffer most from contact with humidity are, for example, the adhesives used to attach the components and the fibres inside the container.

Thus, what is required is containers which have good sealing, allowing the environment inside them to be kept free of humidity and of other external agents, thus allowing all the components present therein to function correctly. In general, these containers are made of a metallic material, for example stainless steel, Kovar™, metal alloys such as copper-tungsten, for example, and, more generally, materials which do not allow humidity to penetrate into the container. The points at which the passage of humidity or of other agents into the container can take place are the regions in which the electrical and optical connections, referred to hereinbelow as electrical feedthroughs and optical feedthroughs, respectively, with the components present inside the container are located.

Another region in which humidity or other external agents can penetrate into the container, when the said container comprises a base and a lid, is the region of the closure between the lid and the base. In order to ensure sealing in this case, the lid is generally closed using a known technique of brazing along the entire peripheral region of contact. This brazing is carried out, for example, by subjecting the said region of contact to an electrical discharge. The metallic material both of the lid and of the base in the said region fuses and hermetically fixes the two parts together.

For the passage of optical fibres into the container from the outside, the optical feedthroughs are sealed using various techniques.

An optical fibre has a portion made of glass with a core and cladding; generally, the dimensions (diameter) are about 10 µm for the core and about 125 µm for the cladding for monomodal optical fibres. In all the types of fibre, the said portion made of glass has a coating made, for example, of acrylate (acrylic resins) or of elastomeric material in general, which has a minimum diameter of about 250 µm and a maximum diameter of about 400 µm in the case of fibres with maintained polarization. A description of fibres with maintained polarization is given in patent application 98EP-100185.2 in the name of the Applicant.

This coating has pores such that they allow humidity to pass into it and thus, when this coating is not removed in making a feedthrough, they also allow humidity to pass into the container and contact the various optical components. The only portion of the optical fibre which ensures sealing is the portion made of glass, which does not allow any passage of humidity or of other agents.

Thus, in order to seal an optical feedthrough, it is necessary to remove the fibre's acrylate coating in the region which will be inserted through the optical feedthrough, thus exposing the "naked" fibre, i.e. the portion made of glass only.

A technique which effects the sealing involves metallizing the fibre, i.e. coating the naked fibre with a metallic layer which is in direct contact with the glass.

An example of metallization of a fibre is described in US patent 4,779,788, in which the metallization process takes place after the outer surface of the fibre has been cleaned thoroughly by immersing it, for example, in hot sulphuric acid and washing it with deionized water. The subsequent metallization takes place by means of a process of evaporating metal particles, which settle on the glass of the fibre and become firmly attached thereto, without allowing any humidity to pass between the fibre and the metal.

An example of this technique for sealing an optical feedthrough is described in European patent application EP 690,322, which describes a method for generating a sealed feedthrough, in which a length of the fibre is first stripped of its acrylate coating. The fibre is placed in a cylindrical body having a first portion in which is placed the length of metallized fibre and a second portion, which has a larger diameter than the first portion, in which is placed the length of fibre following the section stripped of coating. The portion of metallized fibre is soldered inside the said first portion of the cylindrical body using a metallic soldering alloy and the portion of fibre with the coating is attached in the second portion of the cylindrical body by means of an adhesive. Next, the cylindrical body, with the fibre attached inside it, is placed in a feedthrough hole appropriately made on a wall of the container and is fixed therein by soldering around the circumference of the feedthrough hole.

The Applicant has found that this technique is expensive, mainly due to the preparation of the metallized fibre, which is a particularly intricate process, since the naked fibre is very fragile and can thus be damaged during the metallization. In addition, the process is carried out using complex machinery. The metallization must be carried outside the container and before the fibre is connected to any of the components housed in the container.

DE 36 28 391 A describes a cost-effectively producible soldered gas-tight housing feedthrough for an optical fibre made from glass or silica glass, and to a method for producing such a housing feedthrough. The housing feedthrough is constructed in such a way that only a single soldering operation is required. The solder used is a Au-Sn alloy with a melting point of 300 °C. The latter is undertaken in a reducing inert (protective) gas atmosphere. Through the reducing protective gas, the formation of a disturbing oxide layer is avoided, so that no flux is needed for the soldering process.

An epoxy resin fills the space between the waveguide and the body.

EP-A-0 872 748 describes a method for hermetically sealing optical fibre feedthrough and hermetically sealed structure in which a solder layer is filled into between a case, for an optical module wherein an optical element is optically coupled with the optical fibre within the case, and a cover conforming to the shape of the case, thereby simply conducting hermetical sealing. Thereafter, a resin, such as a silicone resin, is potted in the optical fiber introducing section. The two-layer hermetical sealing can realise a method for hermetically sealing an optical fibre introducing section which can maintain airtightness high enough to ensure long-term reliability of an optical module.

The solder material having a melting point, which has no thermal influence on the assembly section within the case, is used for the solder. Solder materials usable herein include Sn-Pb solder, Sn-Sb solder, Sn-In solder, and Au-Sn solder. The solder material is selected by taking into consideration the thermal influence on the interior of the case, temperature conditions under which the structure after hermetical sealing can withstand and the like.

Another technique for sealing an optical feedthrough is described in US patent 5,177,806, which relates to an optical feedthrough in which the fibre, stripped of the acrylate protective layer, is soldered into a tube by means of glass powder ("glass solder"). In particular, that patent describes an optical feedthrough in which a fibre is maintained in a fixed position in a metal sleeve, while a glass powder is brought to high temperature and then cooled to form a solder inside this sleeve on the naked fibre.

The Applicant has observed that, although this solution eliminates the problems associated with metallization of the fibre, it introduces a high risk of damage to the components inside the container. In fact, the glass powders have relatively high melting points (350°C - 500°C) and the components generally must not be taken up to such high temperatures. In this case also, it is necessary to carry out the soldering inside the sleeve before connecting the fibre to the components and mounting these components in the container.

When the fibres are of the type with maintained polarization, the "glass solder" in contact with the said fibre can bring about a reduction of the polarization extinction ratio of this fibre.

Another technique for sealing an optical feedthrough, described in patent application EP 469,853, involves using an epoxy resin to prevent humidity from passing into the feedthrough.

In particular, that patent application describes a light guide with an optical fibre for guiding light from an external source into a closed space. The optical fibre is placed in a feedthrough hole formed in a fixing support for the said light guide. The said support has an inlet hole which communicates with the said feedthrough hole. The optical fibre is coated with a surface layer throughout the feedthrough hole, except for the portion which communicates with the said inlet hole, in which it is naked. An epoxy resin is injected into the inlet hole and comes into contact with the fibre and completely occludes the empty spaces, i.e. in the region in which the fibre is free of coating and along the inlet hole.

The support comprises means for fixing it to a wall of the said closed space, which has a communication hole in which the said support is placed and fixed.

The Applicant has observed that, although epoxy resins are highly leaktight, they however have a porosity which, over a long period of time, in environments with a high humidity content and high temperatures (above 30°), can bring about entry of humidity into the container. In addition, epoxy resins have relatively high crosslinking temperatures and coefficients of thermal dilation which are greater than those of optical fibres, which can result in mechanical-type stress on these fibres.

The Applicant has found that one parameter which has an influence on the leaktightness of a feedthrough is the space between the glass portion of the fibre and the hole which needs to be filled with the material for sealing this feedthrough. Thus, by using resin in contact with the fibre the leaktightness and the resistance to humidity of the feedthrough are inversely proportional to the cross-sectional area to be filled. In order to increase the leaktightness, it is necessary to reduce the inside diameter of the feedthrough down to the smallest dimensions of the fibre. The diameter of the fibre with the acrylate coating can be up to about 400 µm and this measurement thus represents the lower limit for the inside diameter of the feedthrough hole.

The Applicant has found that a combined technique which involves using a metallic soldering alloy on naked fibre to reduce the diameter of the feedthrough and a polymeric sealant in order to carry out the operation for sealing this feedthrough, seals the feedthrough hermetically without compromising the properties of the fibre. This technique allows the polymeric sealant to come into contact with the fibre only in a limited region of the feedthrough, a few tenths of a millimetre, thus resulting in a reduction of the stresses on the fibre. Moreover, by minimizing the area of the circular section filled with polymeric sealant, better sealing is obtained. In addition, the operations required to seal the feedthrough can be carried out after connecting the fibre to the component itself and mounting this component in the container, as the final operation before closing the container.

A first aspect of the present invention relates to an optical system comprising
- a container,
- at least one optical component fixed inside the said container,
- a length of optical fibre which has a plastic coating and is connected to the said optical component, and
- an optical feedthrough for the said section of fibre, placed in a feedthrough hole in a wall of the said container and hermetically fixed therein,
- the said optical feedthrough comprising an elongate body which has a longitudinal feedthrough hole into which the said optical fibre can be placed,
- a portion of the said length of fibre being stripped of the said coating,
characterized in that
the said portion of fibre which is stripped of the coating is soldered to one end of the said elongate body by means of an indium based alloy solder.

Preferably, the said polymeric sealant is an epoxy resin.

In particular, the end of the said elongate body at which the soldering is carried out has a surface which is at an angle of less than 90° relative to the base of the container.

Preferably, the said angle is comprised between 30° and 60°.

In particular, the said elongate body is cylindrical and has a rear portion with an outside diameter which is slightly smaller than the diameter of the hole made in the wall of the container, and a front portion with an outside diameter which is smaller than the diameter of the rear portion.

Preferably, at least one transverse notch communicating with the feedthrough hole is present in the said rear portion.

Preferably, the said fibre is a fibre with maintained polarization.

A further aspect of the present invention relates to a sealed optical feedthrough, comprising
- an elongate body with a longitudinal feedthrough hole in which can be placed an optical fibre provided with a plastic coating,
- a portion of the said fibre (F) being stripped of the said coating,
characterized in that
the said stripped portion of the fibre is soldered to one end of the said body by means of an indium-based alloy solder, and a forming, between the alloy and the fibre glass, a thin layer of oxide which is not removed to ensure a certain degree of adhesion between the alloy and said portion of fibre, and this soldering, in the surface portion around the said portion of fibre, is coated with a layer of a polymeric sealant.

Preferably, the said polymeric sealant is an epoxy resin.

In particular, the end of the said elongate body at which the soldering is carried out has a surface at an angle of less than 90° relative to the longitudinal axis of the said elongate body.

Preferably, the said angle is comprised between 30° and 60°.

In particular, the said elongate body is cylindrical and has a rear portion with a first outside diameter, and a front portion with an outside diameter which is smaller than the said first diameter of the rear portion.

Preferably, at least one transverse notch communicating with the said feedthrough hole is present in the said rear portion.

A further aspect of the present invention relates to a method for protecting optical components, comprising the following steps:
- connecting a length of optical fibre to an optical component,
- mounting the said component inside a base of a container,
- placing an optical feedthrough in a hole present in a wall of the base,
- hermetically fixing the said feedthrough in the said wall,
- stripping a portion of the said optical fibre of its plastic coating,
- sealing the said feedthrough,
- hermetically closing the container with a lid,
- characterized in that the said step of sealing the said feedthrough comprises the steps of
- threading the free end of the said fibre into a hole in the said feedthrough,
- soldering, with an indiun-based alloy, the said portion of fibre stripped of the said coating so as to form between the alloy and the fibre glass a thin layer of oxide which is not removed, to the end of the feedthrough which is placed inside the container, and
- placing a layer of a polymeric sealant in the surface portion of the said solder around the said fibre.

Preferably, the step of mechanically fixing the fibre to the inside of the said feedthrough occurs between the steps of threading the free end of the fibre into a hole in the feedthrough and the step of soldering the stripped portion of fibre with a metal alloy.

A further aspect of the present invention relates to a method for sealing an optical feedthrough which connects, by means of an optical fibre, an optical component placed inside a container with the outside, characterized in that it comprises the following steps:
- stripping a portion of the said optical fibre of a layer of plastic coating,
- threading the free end of the said fibre into a hole in the said feedthrough,
- mechanically fixing the fibre inside the said feedthrough,
- soldering, with an indium-based alloy, the said portion of fibre stripped of the said coating so as to form between the alloy and the fibre glass a thin layer of oxide which is not removed, to the end of the feedthrough placed inside the container,
- placing a layer of a polymeric sealant in the surface portion of the said solder around the said fibre.

A further aspect of the present invention relates to a method for hermetically sealing an optical fibre with respect to a feedthrough, characterized in that it comprises the following steps:
- stripping a portion of the said fibre of the coating so as to expose the glass,
- filling the space between the fibre and the feedthrough with a soldering indium-based alloy , so as to form between the alloy and the fibre glass a thin layer of oxide which is not removed,
- sealing with a polymeric sealant the portion of soldering alloy in contact with the glass of the fibre.

Further details may be obtained from the following description, with reference to the attached drawings, in which:
Figure 1 shows a container for optoefectronic devices, in partial longitudinal cross section, in which the optical feedthroughs are made according to the present invention;
Figure 2 shows an optical feedthrough, in partial longitudinal cross section, before the sealing process according to one embodiment of the present invention;
Figure 3 shows an optical feedthrough after the sealing process according to the same embodiment of the present invention;
Figure 4 shows an enlarged feature of Figure 3, which reveals the region of sealing of the optical feedthrough according to the same embodiment of the present invention;
Figure 5 shows an optical feedthrough, in partial longitudinal cross section, after the sealing process according to a further embodiment of the present invention.

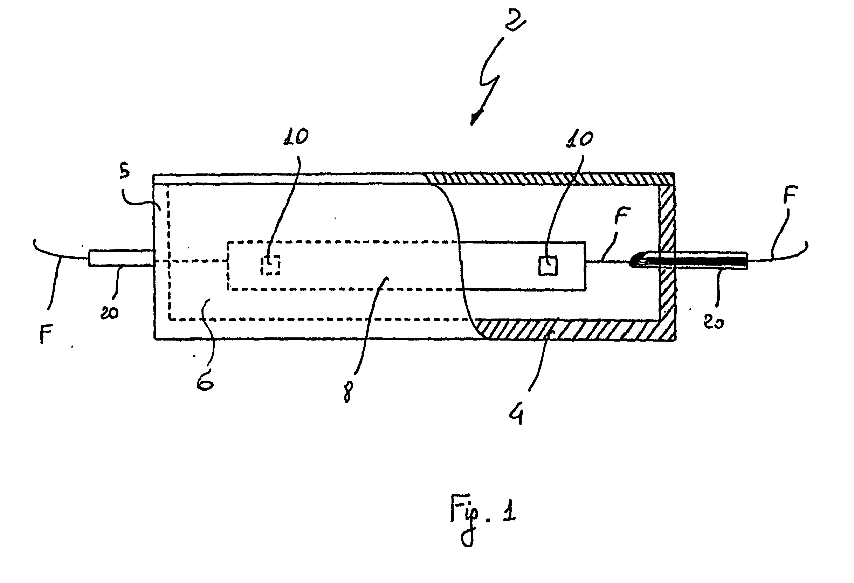

Figure 1 illustrates an example of a container 2 for optical components, for example of passive or active type, for example electrooptic and/or acousto-optic devices, from which leave optical fibres F connected internally to the container with the said components. In particular, this container for optical components 2 comprises a base 4, which is preferably box-shaped, and a lid 6 which closes onto the said base. It should be noted that the present invention can be applied to any type of container which has a closed body of any shape and a sealed mechanical closing system.

For illustrative purposes, an electro-optic component 8 is shown inside the said base 4 of the container 2, this component being electrically connected by a pair of electrical contacts 10, and connected to two optical fibres F.

This component 8 can be, for illustrative purposes, an electrooptic modulator which also comprises electric feedthroughs (not represented). In addition, passive and active components which are different from each other can be housed inside the container.

The optical connections between the said component and the fibre F are made according to known techniques which are indicated as "pigtailing".

The said optical fibres) F leaves) the container via optical feedthroughs 20, preferably located on the side walls of the container, which ensure the leaktightness inside the container.

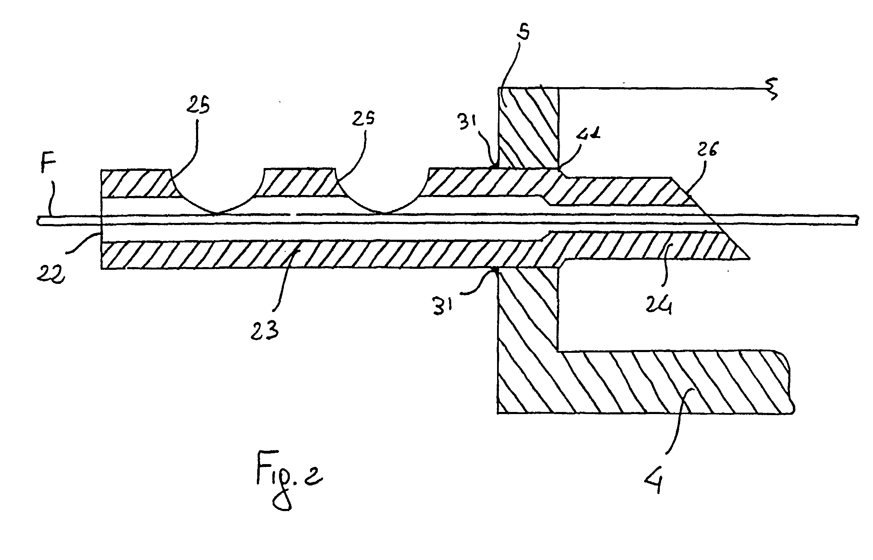

Figure 2 represents an embodiment of the optical feedthrough 20 according to the present invention, in which the said optical feedthrough 20 is soldered in a hole 41 made in the wall 5 of the base 4 of the container, the diameter of which hole is slightly larger than the maximum diameter of the feedthrough, using a metallic soldering alloy 31 (for example gold-tin) preferably placed around the circumference in the region of contact between the feedthrough and the hole on the outer surface of the wall of the base 4. This soldering ensures the leaktightness of the region between the hole 41 and the outer surface of the feedthrough 20. For illustrative purposes, this feedthrough is shown with a cylindrical outer shape, but can equally be made in other shapes, provided that the hole 41 made in the wall of the container is made in the same shape as that of the feedthrough.

This feedthrough preferably comprises a cylindrical body 21 made of metal, for example an iron-nickel-cobalt alloy (Kovar™), a steel or an iron-based alloy, having a longitudinal feedthrough hole 22. The cylindrical body 21 has a rear portion 23, whose diameter is slightly smaller than the diameter of the hole 41 made in the wall of the container, and a front portion 24 whose outside diameter is preferably smaller than the diameter of the rear portion 23. In addition, in this rear portion, the feedthrough hole 22 has a larger diameter than that of the front portion 24.

Transverse notches 25 are present in the rear portion, these notches preferably being of semicircular cross section and of a depth such as to place them in communication with the feedthrough hole 22. In the example illustrated in Figure 2, there are two notches: however, for the purposes of the present invention, the number of notches can equally well be larger or smaller. The end of the front portion 24 ends with a surface 26 which is oblique relative to the vertical represented in this figure by the wall of the container. This oblique surface has an angle of less than 90° relative to the base of the container 2. Preferably, this angle is comprised between 30° and 60°.

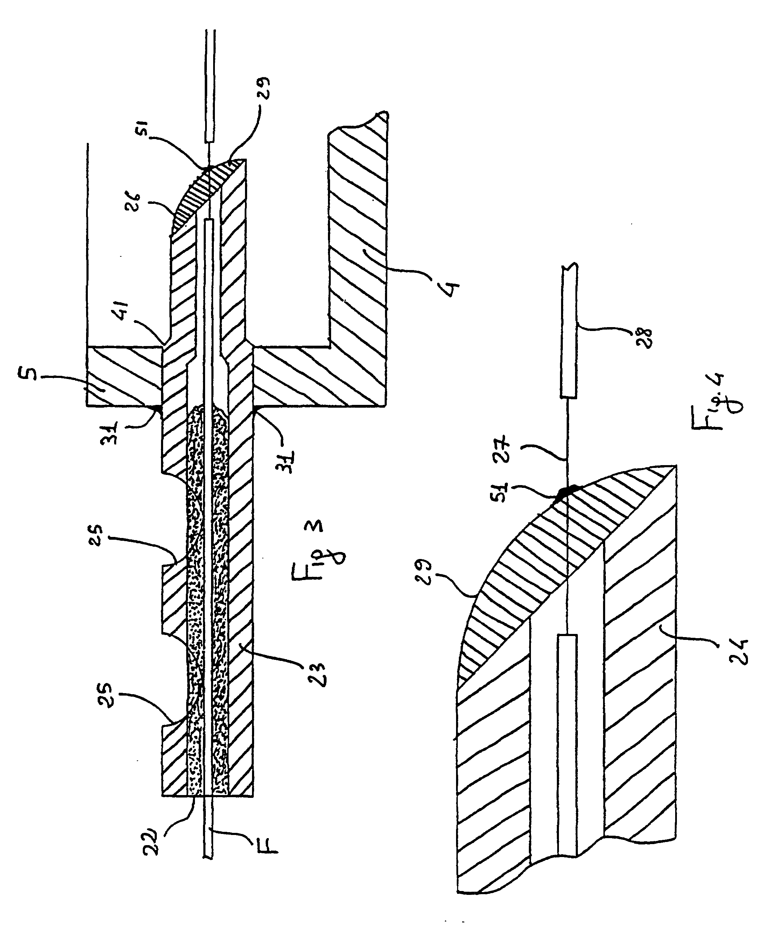

Figure 3 illustrates the same embodiment of the feedthrough as Figure 2 after the process of fixing the fibre inside it and the subsequent sealing operation.

In particular, fibre F, comprising a portion made of glass 27 and a coating made of plastic 28, for example an acrylic resin, is placed in the feedthrough 20 advantageously after it has been connected to the device (not represented in this figure but shown for illustrative purposes in Figure 1) and after this device has been mounted in the container 2. In addition, a plastic tube for mechanically protecting the fibre is preferably inserted in the feedthrough hole 22.

A silicone adhesive is inserted via the notches 25, the function of this adhesive being to mechanically attach the fibre F to the feedthrough 20, but it does not ensure the leaktightness of this feedthrough.

The first step of the sealing process consists in removing the acrylate protective layer 27 from the fibre. This operation can be carried out, for example, with a jet of hot air capable of stripping off this acrylate layer, or alternatively with a laser.

Next, a metallic soldering alloy 29 is deposited close to the region of fibre stripped of the protective coating. The alloy advantageously adheres to the oblique portion 26 inside the container. It is preferable to use indium-based alloys since the mechanical properties of this type of material ensure limited stresses on the fibre. In order to achieve good soldering, it is necessary to bring the region to be soldered to a temperature close to the melting point of the alloy used. A number of indium-based alloys are characterized by relatively low melting points (for example, In Sn, melting point: 118°C); this fact makes it possible to obtain adhesion between the soldering alloy and the feedthrough without excessively heating the container and the components contained therein.

Advantageously, the indium-based alloys at least partially adhere to non-metallic substrates such as, for example, glass or ceramic. This property, associated with the formation of a thin layer of oxide between the alloy and the substrate, ensures a certain degree of adhesion between the alloy and the naked fibre.

Next, one drop of a polymeric sealant 51 is placed on the naked fibre close to the metallic soldering alloy 29. This sealant is hardened by, for example, raising the temperature or exposure to light, for example ultraviolet light.

A polymeric sealant which is suitable for this purpose is, for example, an epoxy resin known as H77 Epo-tek produced by Epoxy Technology Inc. (USA).

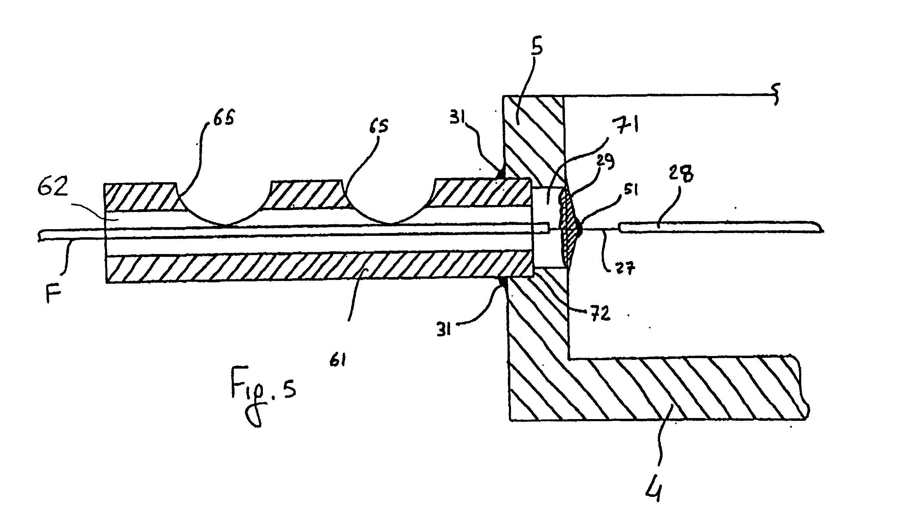

Figure 4 in particular shows the region of the soldering between the fibre F and feedthrough 20. The polymeric sealant, in this case the epoxy resin, ensures leaktightness between the naked fibre and the metallic soldering alloy 29 and thus ensures the leaktightness of the container.

In general, the term polymeric sealant means a material which is capable of ensuring a high level of leaktightness; in particular a resin, for example an epoxy resin or an acrylic resin or a silicone resin. Preferably, it is an epoxy resin.

Figure 5 represents an optical feedthrough according to another embodiment of the present invention, in which a feedthrough 60, which is preferably cylinder-shaped, is soldered in a hole 71 made in the wall 5 of the container. This hole has a portion in which the diameter is slightly larger than the maximum diameter of the feedthrough, and a portion of smaller diameter so as to form a stop ring 72 inside the wall of the container. The feedthrough 60 is inserted into this hole 71 from the outside until it reaches the stop ring 72. Using a metallic soldering alloy 31 (for example gold-tin) preferably placed around the circumference in the region of contact between the feedthrough 60 and the hole 71 on the outer surface of the wall 5, the feedthrough is fixed to the wall of the container and leaktightness of the region between the hole 71 and the outer surface of the feedthrough 60 is ensured.

This feedthrough preferably comprises a cylindrical body 61 which has a longitudinal feedthrough hole 62. The cylindrical body has transverse notches 65, preferably of semicircular cross section, the depth of which is such as to place them in communication with the feedthrough 62. In the example illustrated in Figure 5, there are two notches: however, in the scope of the present invention, the number of notches may equally well be larger or smaller.

In this embodiment, the fibre F, comprising the portion made of glass 27 and the acrylate coating 28, is inserted into the feedthrough 60 advantageously after it has been connected to the device (not represented in this figure but shown for illustrative purposes in Figure 1) and the device itself mounted on the base 4 of the container 2.

An adhesive is inserted via the notches 25, the function of this adhesive being to mechanically attach the fibre F to the feedthrough 20, but it does not ensure the leaktightness of this feedthrough.

The first step of the sealing process consists in removing the acrylate protective layer 27 from the fibre. This operation can be carried out, for example, with a jet of hot air.

Next, a metallic soldering alloy 29 is deposited close to the region of fibre stripped of the protective coating. The alloy adheres to the naked fibre 26 and to the inner walls of the container, and also at least partially fills the inner portion of the hole 71 not occupied by the feedthrough 60. In a similar manner to that of the above embodiment, a drop of polymeric sealant 51 is placed on the naked fibre close to the metallic soldering alloy 29.

It should be noted that, in both embodiments, the mechanical gripping of the fibre in the feedthrough is not achieved by the soldering 29, but by the adhesive 30 inserted into the said notches. Thus, in the event of accidental tearing or of tensile stresses on the fibre outside the container, the sealing of the feedthrough is not affected thereby in any way.

In addition, after sealing the feedthrough, it is advantageous to coat the region of fibre remaining naked inside the container with a layer of protective silicone adhesive.

Optionally, before carrying out the metallic soldering on the feedthrough, it is possible to insert this silicone adhesive into the feedthrough hole, so as to protect, inside the feedthrough, any regions of the fibre remaining naked, i.e. which will not be coated with the solder.

A feedthrough according to this embodiment was tested by carrying out the tests according to a process described in standard MIL-STD-883E, the purpose of which is to check the leaktightness of containers for optical, electronic and semiconductor components.

Five containers of the same type, in which was inserted a pair of feedthroughs made according to the present invention, were tested. In particular, these containers are box-shaped and made of stainless steel; in addition, they have a length of 108 mm, a width of 15 mm and a height of 10 mm. The optical feedthroughs are made of an iron-nickel-cobalt alloy (Kovar™) and are placed on opposite walls of the container at a height of 5 mm from the base in the centre of each wall. All the walls of the container have a substantially constant thickness of about 2 mm.

In particular, using a Panda™ type fibre with maintained polarization, which is a type of fibre that is particularly sensitive to mechanical forces, the following were measured:
- the polarization extinction ratio in the optical fibre [dB];
- the ratio of infiltration or of leakage per unit of time ("leak rate") [atm cm³/sec].

The test carried out on the containers ("leak test") consists in placing the container in a helium-saturated atmosphere in which is produced a pressure of greater than 2 atm at constant temperature for a period of more than 4 hours. This procedure is described in detail in the abovementioned standard and is known as "bombing". In this way, the gas forcibly penetrates into this container and, once the container is removed from the pressurized atmosphere, the amount of gas which leaks from the container into the atmosphere can be measured.

Substituting the selected values of pressure and duration of bombing, in the formula described in the standards, gives the specification relating to the leaktightness, i.e. the "leak rate" value below which the container can be considered as being effectively leaktight.

The 5 containers tested had an internal volume of greater than 0.4 cm³.

Under the experimental conditions chosen (pressure of 2 atm and duration of 4 hours), the threshold value is 3 x 10⁻⁸ atm cm³/sec. Helium was used as tracer gas in these tests.

In all of the containers, the "leak rate" value was less than the threshold value, and the results are collated in the following table:

| Container | C168 A18 | C150 A18 | C130 A6 | C162 A11 | C176 A07 |
|---|---|---|---|---|---|
| Duration | 10 d | 10 d | 10 d | 10 d | 10 d |
| Nitrogen (%) | 87.9 | 87.5 | 87.8 | 88.8 | 87.3 |
| Helium (%) | 9.17 | 9.04 | 8.97 | 8.96 | 9.38 |
| Humidity (%) | 1 | 1.36 | 0.9 | 0.6 | 0.9 |
| Leak rate | 2.4×10⁻⁹ | 9.7×10⁻⁹ | 3.6×10⁻⁹ | 8.5×10⁻⁹ | 1×10⁻⁹ |
| Comments | leaktight | leak-tight | leak-tight | leak-tight | leaktight |

It is observed that the percentages of nitrogen, helium and humidity indicated in the table are measured, at the end of the test (10 days) by making a hole in the container and measuring the properties of the gas contained therein.

In particular, it is seen from the table that the five containers were leaktight (leak rate < 3 × 10-⁸).

The result of the test, carried out on the same five containers, of the polarization extinction ratio for the Panda™ fibre used is represented by the average value of this ratio for the five containers. This average value of the variation of this ratio is 0.9 dB (for 0°C/70°C heating cycles) for a pair of feedthroughs placed in opposite walls of the container, and thus about 0.45 dB per feedthrough. This variation is typically negligible for this type of fibre.

## Claims

1. An optical system, comprising
- a container (2),
- at least one optical component (8) fixed inside the said container (2),
- a length of optical fibre (F) which has a plastic coating (27) and is connected to the said optical component, and
- an optical feedthrough (20) for the said section of fibre (F), placed in a feedthrough hole (41) in a wall of the said container and hermetically fixed therein,
- the said optical feedthrough (20) comprising an elongate body (21) which has a longitudinal feedthrough hole (22) into which the said optical fibre (F) is placed,
- a portion of the said length of fibre (F) being stripped of the said coating (27),
**characterized in that**
the said portion of fibre (F) which is stripped of the coating is soldered to one end of the said elongate body (21) by means of an indium-based alloy solder (29) forming, between the alloy and the fibre glass, a thin layer of oxide which is not removed to ensure a certain degree of adhesion between the alloy and said portion of fibre (F), and this soldering, in the surface portion around the said portion of fibre, is coated with a layer of a polymeric sealant (51).

2. System according to Claim 1, **characterized in that** the said polymeric sealant is an epoxy resin.

3. System according to Claim 1, **characterized in that** the end of the said elongate body (21) at which the soldering (29) is carried out has a surface which is at an angle of less than 90° relative to the base of the container.

4. System according to Claim 3, **characterized in that** the said angle is comprised between 30° and 60°.

5. System according to one or more of the preceding claims, **characterized in that** the said elongate body (21) is cylindrical and has a rear portion (23) with an outside diameter which is slightly smaller than the diameter of the hole (41) made in the wall of the container, and a front portion (24) with an outside diameter which is smaller than the diameter of the rear portion (23).

6. System according to the preceding claims, **characterized in that** at least one transverse notch (25) communicating with the feedthrough hole (22) is present in the said rear portion (23).

7. System according to one or more of the preceding claims, **characterized in that** the said fibre (F) is a fibre with maintained polarization.

8. Sealed optical feedthrough, comprising
- an elongate body (21) with a longitudinal feedthrough hole (22) in which is placed an optical fibre (F) provided with a plastic coating (27),
- a portion of the said fibre (F) being stripped of the said coating (27) so as to expose the glass,
**characterized in that**
the said stripped portion of the fibre (F) is soldered to one end of the said body (21) by means of an indium-based alloy solder (29) forming, between the alloy and the fibre glass, a thin layer of oxide which is not removed to ensure a certain degree of adhesion between the alloy and said portion of fibre (F), and this soldering, in the surface portion around the said portion of fibre, is coated with a layer of a polymeric sealant (51).

9. Feedthrough according to Claim 8, **characterized in that** the said polymeric sealant is an epoxy resin.

10. Feedthrough according to Claim 8, **characterized in that** the end of the said elongate body (21) at which the soldering (29) is carried out has a surface at an angle of less than 90° relative to the longitudinal axis of the said elongate body.

11. Feedthrough according to Claim 10, **characterized in that** the said angle is comprised between 30° and 60°.

12. Feedthrough according to one of Claims 8-11, **characterized in that** the said elongate body (21) is cylindrical and has a rear portion (23) with a first outside diameter, and a front portion (24) with an outside diameter which is smaller than the said first diameter of the rear portion (23).

13. Feedthrough according to one of Claims 8-12, **characterized in that** at least one transverse notch (25) communicating with the said feedthrough hole (22) is present in the said rear portion (23).

14. Method for hermetically sealing an optical fibre with respect to a feedthrough, comprising the following steps:
- stripping a portion of the said optical fibre of the coating so as to expose the glass,
- filling the space between the fibre and the feedthrough with an indium-based alloy solder, in a way to form, between the alloy and the fibre glass, a thin layer of oxide which is not removed to ensure a certain degree of adhesion between the alloy and said portion of fibre (F),
- sealing with a polymeric sealant the portion of soldering alloy in contact with the glass of the fibre.

15. Method for hermetically sealing an optical fibre, according to claim 14, comprising, between the steps of stripping a portion of said optical fibre and the step of soldering the stripped portion of fibre with an indium-based alloy, the step of
- mechanically fixing the fibre to the inside of the said feedthrough.

## Patentansprüche

1. Optisches System mit:
- einem Behälter (2),
- zumindest einer optischen Komponente (8), welche innerhalb des Behälters (2) befestigt ist,
- einer Länge eines Lichtleiters (F), welche eine Plastikbeschichtung (27) hat und mit der optischen Komponente verbunden ist, und
- einer optischen Durchführung (20) für diesen Abschnitt des Lichtleiters (F), platziert in einer Durchführöffnung (41) in einer Wand des Behälters und hermetisch darin befestigt,
wobei die optische Durchführung (20) einen länglichen Körper (21) aufweist, welcher eine längliche Durchführöffnung (22) hat, in welcher der Lichtleiter (F) platziert ist, und wobei ein Bereich der Länge des Lichtleiters (F) von der Beschichtung (27) befreit ist,
**dadurch gekennzeichnet, dass**
der Bereich des Lichtleiters (F), welcher von der Beschichtung befreit ist, an ein Ende des länglichen Körpers (21) mittels eines Legierungslötzinns (29) auf Indiumbasis angelötet ist, wobei zwischen der Legierung und der Glasfaser eine dünne Schicht aus Oxid ausgeformt wird, welche nicht entfernt wird, um einen gewissen Grad von Anhaftung zwischen der Legierung und dem Bereich des Lichtleiters (F) sicherzustellen, und wobei diese Lötstelle in dem Oberflächenbereich um diesen Bereich des Lichtleiters herum mit einem polymerischen Versiegelungsmittel (51) beschichtet ist.

2. System nach Anspruch 1, **dadurch gekennzeichnet, dass** das polymerische Versiegelungsmittel ein Epoxykunstharz ist.

3. System nach Anspruch 1, **dadurch gekennzeichnet, dass** das Ende des länglichen Körpers (21), an welchem das Löten (29) durchgeführt wird, eine Oberfläche hat, welche in einem Winkel von weniger als 90° bezüglich der Basis des Behälters angeordnet ist.

4. System nach Anspruch 3, **dadurch gekennzeichnet, dass** dieser Winkel zwischen 30 und 60° liegt.

5. System nach zumindest einem der vorangehenden Ansprüche, **dadurch gekennzeichnet, dass** der längliche Körper (21) zylindrisch ist und einen hinteren Bereich (23) mit einem äußeren Durchmesser hat, welcher leicht geringer ist als der Durchmesser der Öffnung (41) in der Wand des Behälters, und einen vorderen Bereich (24) mit einem Außendurchmesser, welcher kleiner ist als der Durchmesser des hinteren Bereichs (23).

6. System nach den vorangehenden Ansprüchen, **dadurch gekennzeichnet, dass** zumindest eine querverlaufende Kerbe (25), die mit der Durchführöffnung (22) kommuniziert, in dem hinteren Bereich (23) vorgesehen ist.

7. System nach zumindest einem der vorangehenden Ansprüche, **dadurch gekennzeichnet, dass** der Lichtleiter (F) eine Faser mit beibehaltener Polarisierung ist.

8. Abgedichtete optische Durchführung mit einem länglichen Körper (21) mit einer länglichen Durchfuhröffnung (22), in welcher ein Lichtleiter (F) platziert ist, der seinerseits mit einer Plastikbeschichtung (27) versehen ist, wobei ein Bereich des Lichtleiters (F) von der Beschichtung (27) befreit ist, um das Glas freizulegen,
**dadurch gekennzeichnet, dass**
der Bereich des Lichtleiters (F), welcher von der Beschichtung befreit ist, an ein Ende des länglichen Körpers (21) mittels eines Legierungslötzinns (29) auf Indiumbasis angelötet ist, wobei zwischen der Legierung und der Glasfaser eine dünne Schicht aus Oxid ausgeformt wird, welche nicht entfernt wird, um einen gewissen Grad von Anhaftung zwischen der Legierung und dem Bereich des Lichtleiters (F) sicherzustellen, und wobei diese Lötstelle in dem Oberflächenbereich um diesen Bereich des Lichtleiters herum mit einer Schicht eines polymerischen Versiegelungsmittels (51) beschichtet ist.

9. Durchführung nach Anspruch 8, **dadurch gekennzeichnet, dass** das polymerische Versiegelungsmittel ein Epoxykunstharz ist.

10. Durchführung nach Anspruch 8, **dadurch gekennzeichnet, dass** das Ende des länglichen Körpers (21), an welchem das Löten (29) durchgeführt wird, eine Oberfläche hat, welche in einem Winkel von weniger als 90° bezüglich der Basis des Behälters angeordnet ist.

11. Durchführung nach Anspruch 10, **dadurch gekennzeichnet, dass** dieser Winkel zwischen 30 und 60° liegt.

12. Durchführung nach einem der Ansprüche 8 bis 11, **dadurch gekennzeichnet, dass** der längliche Körper (21) zylindrisch ist und einen hinteren Bereich (23) mit einem äußeren Durchmesser hat, welcher leicht geringer ist als der Durchmesser der Öffnung (41) in der Wand des Behälters, und einen vorderen Bereich (24) mit einem Außendurchmesser, welcher kleiner ist als der Durchmesser des hinteren Bereichs (23).

13. Durchführung nach einem der Ansprüche 8 bis 12, **dadurch gekennzeichnet, dass** zumindest eine querverlaufende Kerbe (25), die mit der Durchführöffnung (22) kommuniziert, in dem hinteren Bereich (23) vorgesehen ist.

14. Verfahren zum hermetischen Abdichten eines Lichtleiters bezüglich einer Durchführung mit den folgenden Schritten:
- Befreien eines Bereichs des Lichtleiters von der Beschichtung, um das Glas freizulegen,
- Ausfüllen des Raums zwischen dem Lichtleiter und der Durchführung mit einem Legierungslötzinn auf Indiumbasis, und zwar so, dass zwischen der Legierung und der Glasfaser eine dünne Oxidschicht ausgeformt ist, welche nicht entfernt wird, um einen gewissen Grad der Anhaftung zwischen der Legierung und dem Bereich des Lichtleiters (F) sicherzustellen, und
- Abdichten des Bereichs der Lötlegierung in Kontakt mit dem Glas des Lichtleiters mit einem polymerischen Versiegelungsmittel.

15. Verfahren nach Anspruch 14, wobei zwischen den Schritten des Befreiens eines Bereichs des Lichtleiters und des Lötens des freigelegten Bereichs des Lichtleiters mit einer Legierung auf Indiumbasis der folgende Schritt durchgeführt wird:
- Mechanisches Befestigen des Lichtleiters am Inneren der Durchführung.

## Revendications

1. Système optique comprenant
- un boîtier (2),
- au moins un composant optique (8) fixé à l'intérieur dudit boîtier (2),
- une longueur de fibre optique (F), qui possède une gaine plastique (27) en vue d'être raccordée audit composant optique, et
- une traversée optique (20) pour ladite section de fibre (F), placée dans un trou traversant (41) formé dans une paroi dudit boîtier et fixée hermétiquement dans ce dernier,
- ladite traversée optique (20) comprenant un corps allongé (21) qui possède un trou traversant longitudinal (22), dans lequel ladite fibre optique (F) est placée,
- ladite gaine (27) étant retirée sur une partie de ladite longueur de la fibre (F),
**caractérisé en ce que**
ladite partie de la fibre (F), dont la gaine est retirée, est soudée à une extrémité dudit corps allongé (21) au moyen d'une soudure formée d'alliage à base d'indium (29) formant, entre l'alliage et la fibre de verre, une mince couche d'oxyde qui n'est pas éliminée de manière à garantir un certain degré d'adhérence entre l'alliage et ladite partie de la fibre (F), et cette soudure est recouverte, dans la partie de surface située autour de ladite partie de la fibre, par une couche d'un produit d'étanchéité polymère (51).

2. Système selon la revendication 1, **caractérisé en ce que** ledit matériau d'étanchéité polymère est une résine époxy.

3. Système selon la revendication 1, **caractérisé en ce que** l'extrémité dudit corps allongé (21), au niveau de laquelle la soudure (29) est exécutée, possède une surface qui fait un angle inférieur à 90° par rapport à la base du boîtier.

4. Système selon la revendication 3, **caractérisé en ce que** ledit angle est compris entre 30° et 60°.

5. Système selon une ou plusieurs des revendications précédentes, **caractérisé en ce que** ledit corps allongé (21) est cylindrique et comporte une partie arrière (23) possédant un diamètre extérieur qui est légèrement inférieur au diamètre du trou (41) formé dans la paroi du boîtier et une partie avant (24) possédant un diamètre extérieur qui est inférieur au diamètre de la partie arrière (23).

6. Système selon les revendications précédentes, **caractérisé en ce qu'**au moins une encoche transversale (25) communiquant avec le trou traversant (22) est présent dans ladite partie arrière (23).

7. Système selon une ou plusieurs des revendications précédentes, **caractérisé en ce que** ladite fibre (F) est une fibre avec une polarisation maintenue.

8. Traversée optique étanchéifiée comprenant:
- un corps allongé (21) possédant un trou traversant longitudinal (22), dans lequel est placé une fibre optique (F) pourvue d'une gaine plastique (27),
- ladite gaine (27) étant éliminée d'une partie de ladite fibre (F) pour exposer le verre,
**caractérisée en ce que**
ladite partie dénudée de la fibre (F) est soudée à une extrémité dudit corps (21) au moyen d'une soudure formée d'un alliage à base d'indium (29) formant, entre l'alliage et la fibre de verre, une couche mince d'oxyde qui n'est pas éliminée pour garantir un certain degré d'adhérence entre l'alliage et ladite partie de la fibre (F) et cette soudure est recouverte, dans la partie de surface entourant ladite partie de la fibre, par une couche d'un matériau d'étanchéité polymère (51).

9. Traversée selon la revendication 8, **caractérisée en ce que** ledit matériau d'étanchéité polymère est une résine époxy.

10. Traversée selon la revendication 8, **caractérisée en ce que** l'extrémité dudit corps allongé (21), qui porte la soudure (29), possède une surface qui fait un angle inférieur à 90° par rapport à l'axe longitudinal dudit corps allongé.

11. Traversée selon la revendication 10, **caractérisée en ce que** ledit angle est compris entre 30° et 60°.

12. Traversée selon l'une des revendications 8 à 11, **caractérisée en ce que** ledit corps allongé (21) est cylindrique et possède une partie arrière (23) comportant un premier diamètre extérieur, et une partie avant (24) possédant un diamètre extérieur qui est inférieur audit premier diamètre de la partie arrière (23).

13. Traversée selon l'une des revendications 10 à 12, **caractérisée en ce qu'**au moins une encoche transversale (25) communiquant avec ledit trou traversant (22) est présente dans ladite partie arrière (23).

14. Procédé pour sceller de façon hermétique une fibre optique par rapport à une traversée, comprenant les étapes suivantes consistant à:
- enlever le revêtement d'une partie de ladite fibre optique pour exposer le verre,
- remplir l'espace entre la fibre et la traversée avec une soudure formée d'un alliage à base d'indium de manière à former, entre l'alliage et la fibre de verre, une mince couche d'oxyde qui n'est pas éliminée afin de garantir un certain degré d'adhérence entre l'alliage et ladite partie de la fibre (F),
- sceller avec un matériau d'étanchéité polymère la partie de l'alliage de soudure en contact avec le verre de la fibre.

15. Procédé pour sceller hermétiquement une fibre optique selon la revendication 14, comprenant, entre les étapes de dénudage d'une partie de ladite fibre optique et l'étape de soudage de la partie dénudée de la fibre avec un alliage à base d'indium, l'étape consistant à:
- fixer mécaniquement la fibre à l'intérieur de ladite traversée.
